# FASCICULE DE BREVET EUROPEEN

(11) **EP 0 988 820 B1**
(45) Date de publication et mention de la délivrance du brevet: **26.02.2003**
(21) Numéro de dépôt: 99420201.8
(22) Date de dépôt: 24.09.1999
(51) Int. Cl.: A47J 31/54

(54) **Chaudière pour appareil électroménager, peu sensible à l'entartrage**
Wassererhitzer für elektrisches Haushaltsgerät mit geringer Anfälligkeit für Kesselstein
Boiler for household electrical appliance, having limited susceptibility to scaling

(30) Priorité: 25.09.1998 FR 9812185
(43) Date de publication de la demande: 29.03.2000
(73) Titulaire: SEB S.A., 69130 Ecully (FR)
(72) Inventeur: Bertry, Didier, 74150 Massingy (FR); Noguez, Jean-Michel, 65100 Lourdes (FR); Estaun, Alain, 65100 Lourdes (FR)

(56) Documents cités:
- DE-A- 3 615 683
- DE-U- 29 809 279

## Description

La présente invention se rapporte au domaine technique général des appareils électroménagers comprenant une chaudière prévue pour la production d'eau chaude.

La présente invention concerne plus particulièrement mais non exclusivement les appareils destinés à la préparation de boissons chaudes.

Il est connu du document DE GM 70 18039 de réaliser une chaudière de type bouilleur, comprenant une chambre d'ébullition dans laquelle sont disposés des moyens de chauffe. La chambre d'ébullition est alimentée en eau par un conduit relié à un réservoir, ledit conduit comportant un clapet anti-retour. L'eau chauffée est évacuée par un tube d'évacuation vertical comportant une extrémité inférieure en biseau dont l'ouverture est disposé dans une cavité ménagée dans le fond de la chambre d'ébullition. Le tube d'évacuation de l'eau comporte une ouverture disposée à proximité du plafond de la chambre d'ébullition et un second clapet anti-retour disposé au dessus de ladite ouverture. Cette ouverture permet d'éviter que de l'eau encore froide présente dans la chambre d'ébullition ne soit évacuée lors du démarrage de la chaudière. Le second clapet permet d'éviter l'entrée d'eau froide tant que l'eau contenue dans la chambre d'ébullition n'a pas été chauffée et évacuée.

Il est par ailleurs connu du document DE 36 15 683 de réaliser une machine à boisson chaude comportant une chaudière de type bouilleur. La chaudière comprend une chambre d'ébullition associée des moyens de chauffe, reliée à un réservoir d'eau par un conduit d'admission d'eau comportant un clapet anti-retour. Ce clapet comporte une bille dont la densité est sensiblement inférieure à celle de l'eau. L'extrémité inférieure d'un tube ascendant de sortie d'eau chaude est disposé à proximité du fond de la chambre d'ébullition, ce tube se prolongeant hors de ladite chambre. Ce tube comporte également peu en dessous du plafond de la chambre un orifice. Cet orifice est prévu pour accélérer l'évacuation de la pression créée dans la chambre d'ébullition. Lorsque la pression est devenue inférieure à celle de la colonne d'eau disposée dans le réservoir supérieur, la bille cesse d'obturer ledit conduit et une nouvelle quantité d'eau est admise dans la chambre d'ébullition. Le diamètre de l'orifice est de préférence compris entre 1/10 et 1/3 du diamètre intérieur du tube de sortie d'eau chaude, ce afin d'assurer une bonne propulsion de l'eau. Un second clapet anti-retour n'est de ce fait plus nécessaire. Une telle construction permet de réaliser une chaudière de conception plus économique que celle décrite dans le document DE GM 70 18039.

Toutefois l'appareil décrit dans le document DE 36 15 683 fonctionne de manière satisfaisante essentiellement lorsque l'eau utilisée n'est pas trop dure. En effet des essais ont montré que lorsque l'eau utilisée est issue d'un milieu calcaire, l'orifice présent sur le tube de sortie d'eau chaude est affecté par l'entartrage et a tendance à se boucher. En l'absence d'un tel orifice, l'eau initialement contenue dans le réservoir peut être vidangée complètement par le tube d'évacuation d'eau. Une telle situation est dommageable car l'appareil ne fonctionne plus correctement.

L'objet de la présente invention est de proposer une chaudière présentant les avantages de celle décrite dans le document DE 36 15 683, à savoir la production d'eau chaude en grande quantité, de manière saccadée ou sensiblement continue, avec une construction économique, mais sans en présenter les inconvénients.

Cet objet est atteint avec une chaudière de type bouilleur, comprenant une chambre d'ébullition associée à des moyens de chauffe, un tube d'admission d'eau présentant une entrée reliée à un réservoir d'eau par l'intermédiaire d'un conduit comportant un clapet anti-retour, un tube ascendant d'évacuation de l'eau chauffée dont l'extrémité inférieure est disposée à proximité du fond de la chambre d'ébullition, ledit tube d'évacuation présentant dans la chambre d'ébullition à proximité du plafond de ladite chambre une ouverture, caractérisé en ce que l'ouverture est formée dans la paroi dudit tube par une découpe longiligne vers le bas.

En d'autres termes, la découpe longiligne vers le bas peut être une découpe longitudinale, en hélice, ou de toute autre forme appropriée. La largeur de la découpe peut être constante ou variable. La découpe peut se prolonger jusqu'à l'extrémité inférieure du tube d'évacuation d'eau, mais peut aussi occuper seulement une partie de la hauteur dudit tube.

De manière surprenante il a été observé qu'avec une telle construction l'entartrage de l'orifice est notoirement réduit, voire quasiment supprimé, sans que le fonctionnement de la chaudière soit par ailleurs affecté. Une chaudière de ce type a pu fonctionner plus de 2000 cycles avec de l'eau dure sans qu'un détartrage soit nécessaire alors que dans ces conditions une chaudière comportant une ouverture sous la forme d'un simple orifice est affectée par les phénomènes d'entartrage beaucoup plus rapidement.

Au début du chauffage la chambre d'ébullition est pressurisée par la vapeur issue de l'ébullition de l'eau. La faible section de l'ouverture permet de favoriser l'expulsion de l'eau. A la fin du chauffage l'ouverture présente une section plus importante, ce qui accélère la décompression donc diminue le temps mort pour le remplissage de la chambre de vaporisation.

La largeur horizontale de l'ouverture est comprise entre 1/10 et 1/3 du diamètre intérieur du tube d'évacuation d'eau, et de préférence entre 1/7 et 1/4. Ces dispositions permettent d'éviter la présence d'un clapet anti-retour dans le tube d'évacuation d'eau.

Avantageusement, l'ouverture ménagée dans le tube d'évacuation se présente sous la forme d'une découpe longitudinale au tube d'évacuation, préférablement de largeur constante. Ces dispositions permettent de simplifier la réalisation de la chaudière.

Avantageusement, la hauteur de l'ouverture ménagée dans le tube d'évacuation est inférieure à 1/3 de la distance entre l'extrémité supérieure de l'ouverture et le fond de la chambre d'ébullition. Cette disposition permet de limiter la formation de vapeur en fin de cycle de vidange de la chambre d'ébullition.

Avantageusement, le tube d'admission d'eau présente une sortie se prolongeant plus bas que la partie supérieure de l'ouverture. Cette disposition favorise la montée en pression dans la chambre d'ébullition.

Avantageusement encore, le clapet anti-retour comporte un flotteur disposé dans un conduit placé à l'intérieur de la chambre d'ébullition. Cette disposition permet d'accélérer le remplissage de la chambre d'ébullition à la fin du cycle de vidange de la chambre d'ébullition.

Avantageusement, la chambre d'ébullition est formée par une coupelle métallique inférieure, à laquelle sont associés les moyens de chauffe, surmontée d'un couvercle en matière plastique comportant le tube d'admission et le tube d'évacuation. Une telle construction est particulièrement économique, car une partie relativement complexe peut être moulée d'un seul tenant.

Avantageusement encore, une zone dépourvue de moyens de chauffe ou de moyens de transmission de la chaleur est prévue sous l'extrémité. inférieure du tube d'évacuation. Cette disposition limite l'entartrage sous le tube d'évacuation.

Avantageusement encore, l'extrémité inférieure du tube d'évacuation est disposée dans une dépression formée dans le fond de la chambre d'ébullition. Cette disposition permet de limiter la production de vapeur en fin de cycle de vidange de la chambre d'ébullition, une telle production de vapeur étant propice à l'entartrage.

Selon un mode de réalisation, les moyens de chauffe sont formés par un élément chauffant plat. Cette disposition permet d'obtenir une chaudière particulièrement performante, et de plus de poids et d'encombrement réduit.

Selon un autre mode de réalisation, les moyens de chauffe sont formés par un élément chauffant blindé associé à une plaque de diffusion de chaleur fixée sous le fond de la chambre d'ébullition. Cette disposition permet d'obtenir une chaudière de construction économique.

La présente invention concerne également un appareil électroménager, notamment de type machine à boisson chaude, comportant un réservoir d'eau alimentant une chaudière du type précité reliée à un conduit d'évacuation de l'eau chauffée.

L'invention sera mieux comprise à l'étude de modes de réalisation pris à titre nullement limitatifs et illustrés dans les figures annexées dans lesquelles :
- la figure 1 est une vue en coupe verticale d'un exemple de réalisation d'une chaudière selon l'invention,
- la figure 2 est une vue partielle en coupe verticale d'un détail d'une variante de réalisation de l'exemple montré à la figure 1.
- la figure 3 est une vue partielle en coupe verticale d'un autre exemple de réalisation.
- la figure 4 est une vue partielle en coupe verticale d'un détail d'une variante de réalisation de l'exemple montré à la figure 3.

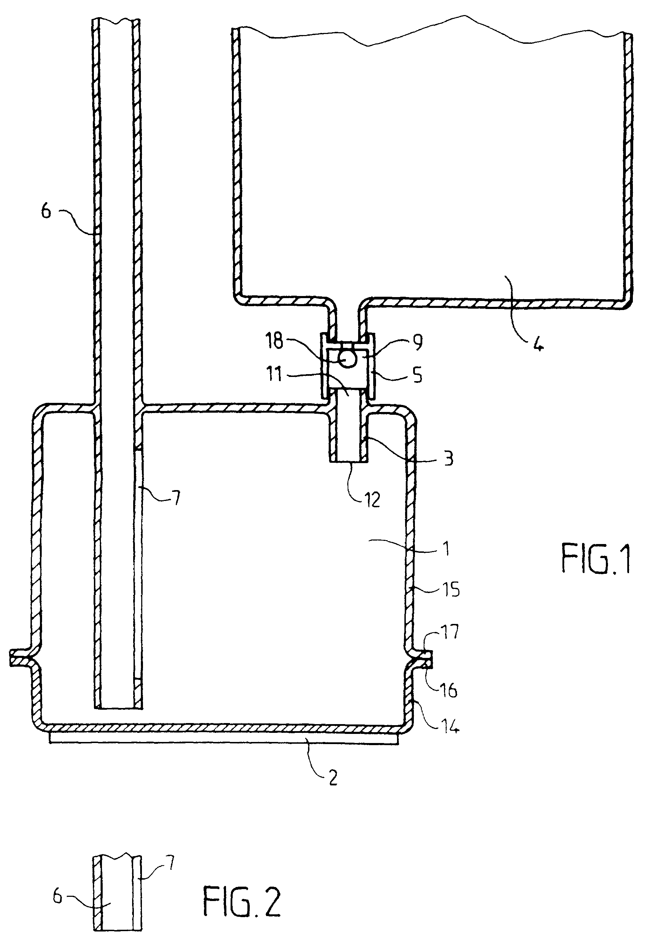

La figure 1 montre une chaudière de type bouilleur, pour appareil électroménager. La chaudière comprend une chambre d'ébullition 1 associée à des moyens de chauffe 2. Un tube d'admission d'eau 3 présente une entrée 11 reliée à un réservoir d'eau 4 par l'intermédiaire d'un conduit 5 comportant un clapet anti-retour 9. Un tube ascendant d'évacuation 6 de l'eau chauffée comprend une partie inférieure dont l'extrémité est disposée à proximité du fond de la chambre d'ébullition 1, et une partie supérieure émergeant hors de ladite chambre. Le tube d'évacuation 6 est vertical et présente dans la chambre d'ébullition 1 une ouverture 7 à proximité du plafond de ladite chambre.

Selon l'invention, l'ouverture 7 est formée dans la paroi du tube d'évacuation 6 par une découpe longiligne vers le bas.

La largeur horizontale de l'ouverture est comprise entre 1/10 et 1/3 du diamètre intérieur du tube d'évacuation d'eau 6, et de préférence entre 1/7 et 1/4 dudit diamètre.

Selon le mode de réalisation montré à la figure 1, l'ouverture 7 se présente sous la forme d'une découpe longitudinale, de largeur constante. A titre de variante, la largeur de la découpe peut aller en augmentant vers le bas.

Le tube d'admission 3 se prolonge dans la chambre 1 pour présenter une sortie 12 disposée à distance du plafond de ladite chambre. La sortie 12 se prolonge avantageusement plus bas que la partie supérieure de l'ouverture 7.

La chambre d'ébullition 1 est formée par une coupelle métallique inférieure 14 surmontée d'un couvercle 15 réalisé en matière plastique. Les moyens de chauffe 2 sont réalisés sous forme d'élément chauffant plat et sont disposés sous le fond de la coupelle 14. Une zone dépourvue de pistes chauffantes peut être prévue en regard de l'extrémité du tube d'évacuation 6. A titre de variante d'autres types de moyens de chauffe, tels que notamment des éléments chauffants blindés peuvent être envisagés.

La périphérie de la coupelle 14 présente une collerette 16 assemblée avec une collerette correspondante 17 formée par la partie inférieure du couvercle 15. L'assemblage des collerettes 16, 17 peut être réalisé par collage, rivetage, agrafage, ou tout moyen approprié.

Le tube d'admission 3 et le tube d'évacuation 6 sont obtenus par moulage avec le couvercle 15. A titre de variante, le couvercle 15 peut être réalisé en matière métallique, le conduit d'arrivée 3 et le conduit d'évacuation 6 étant obtenus par sertissage ou soudage de tubes sur ledit couvercle.

Le clapet anti-retour comporte une bille 18 réalisée dans une matière de densité voisine de celle de l'eau, telle que par exemple du polypropylène ou de l'EPDM.

Selon une variante de réalisation montrée à la figure 2, la découpe 7 se prolonge jusqu'à l'extrémité inférieure du tube d'évacuation 6.

Des moyens de sécurité à la surpression, non montrés aux figures, peuvent être prévus sur la chambre d'ébullition.

L'invention concerne également un appareil électroménager utilisant une telle chaudière. A cet effet pour obtenir une machine à boisson chaude, un conduit de sortie débouchant au dessus d'un réceptacle à boisson est monté à l'extrémité supérieure du tube d'évacuation 6. Un porte filtre ou tout autre dispositif approprié peut être prévu au dessus du réceptacle à boisson.

L'invention s'utilise et fonctionne de la manière suivante.

L'utilisateur verse de l'eau dans le réservoir 4. L'eau s'écoule du réservoir 4 par le conduit 5 et va remplir la chambre d'ébullition 1 et le tube d'évacuation 6. L'air présent dans la chambre d'ébullition 1 s'échappe par l'ouverture 7 dans le tube d'évacuation 6. Une petite quantité d'air reste dans le plafond de la chambre d'ébullition 1.

La mise en route des moyens de chauffe 2 entraîne l'ébullition de l'eau et la formation de vapeur qui vient dans la partie supérieure de la chambre d'ébullition 1. Le bouillonnement de l'eau dans le tube d'admission d'eau associé à la pression de la vapeur provoquent la montée de la bille 18 et la fermeture du clapet 9. La pression de vapeur dans la chambre d'ébullition 1 propulse alors l'eau chauffée hors de ladite chambre par le tube d'évacuation 6. Lorsque le niveau de l'eau atteint à la baisse l'extrémité supérieure de l'ouverture 7, la surpression de vapeur peut commencer à s'échapper. La mise à l'air libre au moins partielle de la sortie 12 du tube d'admission 3 due aux tourbillons créés à la surface de l'eau par l'ébullition peut entraîner le départ de l'eau contenue dans le tube d'admission 12. Tant que la pression reste suffisante dans la chambre 1, la bille 18 empêche l'admission d'une nouvelle quantité d'eau froide dans la chambre 1. Après la retombée de la bille 18 une nouvelle quantité d'eau est admise dans la chambre 1.

Grâce à la présence de l'ouverture 7 sur le tube d'évacuation 6, la chaudière selon l'invention peut fonctionner de nombreux cycles avec de l'eau dure sans nécessiter l'utilisation de produits chimiques anti-tartre.

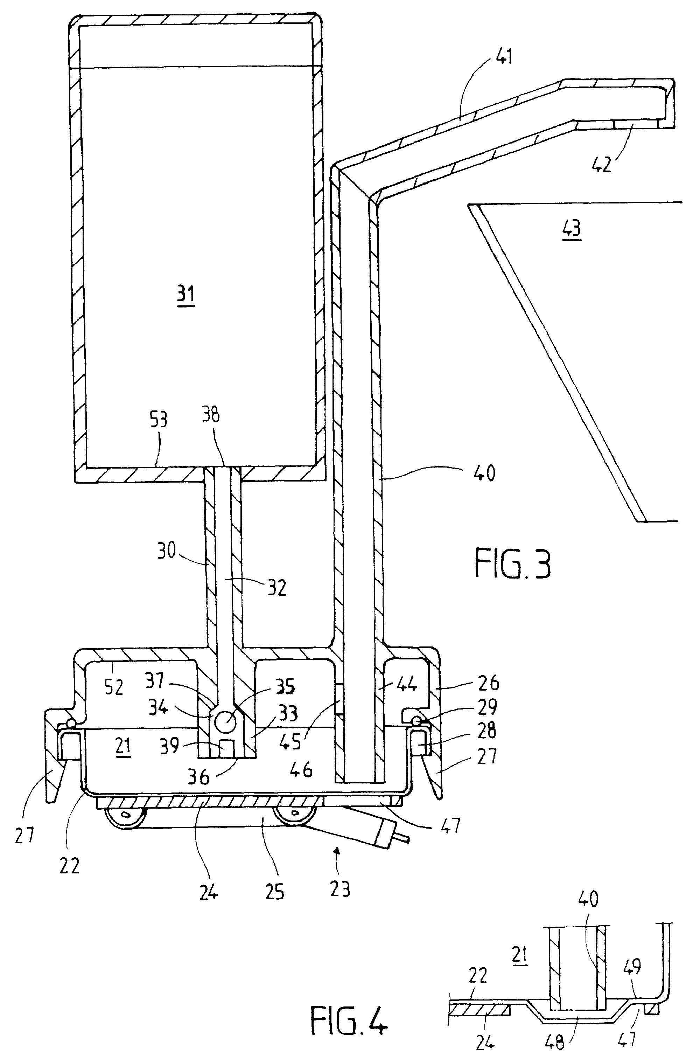

La figure 3 montre un autre exemple de réalisation d'une chaudière selon l'invention.

La chaudière comporte une chambre d'ébullition 21 formée par une coupelle métallique inférieure 22, réalisée par exemple en acier inoxydable, fermée par un couvercle 26, réalisé par exemple en matière plastique. Des moyens de chauffe 23 sont formés par un élément chauffant blindé 25 monté sous une plaque 24 de diffusion de chaleur fixée sous la coupelle 22. De préférence l'élément chauffant blindé 25 est solidarisé à la plaque 24 par brasage, la plaque 24 étant solidarisée également par brasage avec le fond de la coupelle 22. Le couvercle 26 comporte des pattes de clipsage 27 sur une collerette 28 de la coupelle 22. Un joint annulaire 29 est monté entre la coupelle 22 et le couvercle 26.

Un conduit 32 est ménagé entre le fond d'un réservoir d'eau 31 et la chambre d'ébullition 21. Le conduit 32 traverse le plafond 52 du couvercle 26 de la chambre d'ébullition 21. A l'extérieur de la chambre d'ébullition 21 le conduit 32 est formé par un tube 30 vertical issu du plafond du couvercle 26. A l'intérieur de la chambre d'ébullition 21 le conduit 32 est formé par un tube d'admission d'eau 33 issu du plafond du couvercle 26 et descendant vers le fond de la chambre d'ébullition 21. L'entrée 38 du conduit 32 est ménagée dans le fond du réservoir 31. L'extrémité supérieure du tube 30 débouche dans le fond 53 du réservoir 31. Un clapet anti-retour 34 est ménagé dans le tube 33. Le clapet 34 comporte un flotteur 35 susceptible de venir en appui contre un siège 37 pour obturer le conduit 32. La course du flotteur 35 est limitée vers le bas par une butée 39. Les tubes 30 et 33 peuvent être moulés avec la pièce formant le couvercle 26.

Le conduit d'évacuation de l'eau chauffée comporte un tube d'évacuation d'eau 40 s'élevant sensiblement verticalement dans la chambre d'ébullition 21 et se prolongeant hors de ladite chambre. Le tube 40 est prolongé par une goulotte 41 inclinée comportant une sortie 42 disposée au dessus d'un porte filtre 43. L'extrémité inférieure 46 du tube d'évacuation 40 est plus proche du fond de la chambre d'ébullition 21 que l'extrémité inférieure du tube d'admission 33. Une rainure verticale 45 est ménagée dans la paroi 44 du tube 40 disposée dans la chambre d'ébullition 21. Le tube 40 peut être moulé avec la pièce formant le couvercle 26.

Tel que montré à la figure 3, la plaque 24 comporte une épargne 47 sous le tube d'évacuation 40.

Lors du remplissage du réservoir 31 l'eau s'écoule par le conduit 32, l'air présent dans la chambre d'ébullition 21 étant chassé dans le tube d'évacuation 40 par la rainure 45. Le flotteur 34 soulevé par l'eau vient en appui sur le siège 37 pour fermer le conduit 32, le niveau de l'eau dépassant alors l'extrémité supérieure de la rainure 45.

Avec l'alimentation des moyens de chauffe 23 la température de l'eau présente dans la chambre d'ébullition s'élève. Après le début de l'ébullition, l'eau chauffée est expulsée par le tube d'évacuation 40 jusqu'à ce que la pression de vapeur dans la chambre d'ébullition 21 soit inférieure à la pression exercée par l'eau présente dans le réservoir 31. La hauteur de la colonne d'eau présente dans le conduit 32 permet de faciliter le remplissage de la chambre d'ébullition, en particulier lorsque le réservoir 31 est presque vide. A cet effet le clapet anti retour 34 à flotteur 35 peut être éloigné du plafond du couvercle 26 de la chambre d'ébullition 21. Le dégagement de vapeur peut être réduit en limitant la hauteur de la rainure 45 à une valeur inférieure à 1/3 de la distance séparant l'extrémité supérieure de la rainure au fond de la chambre d'ébullition.

Avantageusement la section du conduit de remplissage est plus faible que la section du tube d'évacuation. Un rapport entre le diamètre intérieur du conduit de remplissage et le diamètre intérieur du tube d'évacuation compris entre 1,5 et 2,5 est préféré. Cette disposition permet de limiter la formation de vapeur par rapport à une construction dans laquelle le diamètre intérieur du conduit de remplissage et le diamètre intérieur du tube d'évacuation sont sensiblement voisins. Dans l'exemple représenté à la figure 3, le diamètre intérieur du conduit de remplissage 32 entre le fond 51 du réservoir 31 et le clapet anti retour 34 est environ deux fois plus faible que le diamètre intérieur du tube d'évacuation 40.

La figure 4 montre une variante de l'exemple de réalisation précédent dans laquelle l'extrémité inférieure du tube d'évacuation 40 est disposée dans une dépression 48 formée dans le fond de la coupelle 22. La dépression est obtenue par exemple par emboutissage de la coupelle 22. La plaque de diffusion de la chaleur 24 comporte également une épargne 47 au niveau de la dépression 48. De préférence, tel que montré à la figure 4, l'épargne 47 entoure largement la dépression 48, de manière à laisser une zone 49 du fond plane et dépourvue de plaque 24.

De nombreuses améliorations peuvent être apportées à ces chaudières dans le cadre des revendications.

## Revendications

1. Chaudière de type bouilleur, comprenant une chambre d'ébullition (1 ; 21) associée à des moyens de chauffe (2; 23), un tube d'admission d'eau (3 ; 33) présentant une entrée (11 ; 38) reliée à un réservoir d'eau (4; 31) par l'intermédiaire d'un conduit (5 ; 32) comportant un clapet anti-retour (9 ; 34), un tube ascendant d'évacuation (6; 40) de l'eau chauffée dont l'extrémité inférieure est disposée à proximité du fond de la chambre d'ébullition, ledit tube d'évacuation présentant dans la chambre d'ébullition à proximité du plafond de ladite chambre une ouverture (7; 45), **caractérisé en ce que** l'ouverture (7; 45) est formée dans la paroi dudit tube par une découpe longiligne vers le bas.

2. Chaudière selon la revendication 1, **caractérisée en ce que** la largeur horizontale de l'ouverture (7) est comprise entre 1/10 et 1/3 du diamètre intérieur du tube d'évacuation d'eau (6), et de préférence entre 1/7 et 1/4 dudit diamètre.

3. Chaudière selon l'une des revendications 1 ou 2, **caractérisée en ce que** l'ouverture (7; 45) se présente sous la forme d'une découpe longitudinale au tube d'évacuation (6 ; 40).

4. Chaudière selon la revendication 3, **caractérisée en ce que** la découpe longitudinale est de largeur constante.

5. Chaudière selon l'une des revendications 1 à 4, **caractérisée en ce que** la hauteur de l'ouverture (45) est inférieure à 1/3 de la distance entre l'extrémité supérieure de l'ouverture (45) et le fond de la chambre d'ébullition (21).

6. Chaudière selon l'une des revendications 1 à 5, **caractérisée en ce que** le tube d'admission d'eau (3; 33) présente une sortie (12 ; 36) se prolongeant plus bas que la partie supérieure de l'ouverture (7 ; 45).

7. Chaudière selon l'une des revendications 1 à 6, **caractérisée en ce que** le clapet anti-retour (34) comporte un flotteur (35) disposé dans un conduit (32) placé à l'intérieur de la chambre d'ébullition (21).

8. Chaudière selon l'une des revendications 1 à 7, **caractérisée en ce que** la chambre d'ébullition (1; 21) est formée par une coupelle métallique inférieure (14; 22), à laquelle sont associés les moyens de chauffe (2 ; 23), surmontée d'un couvercle (15; 26) comportant le tube d'admission (3; 33) et le tube d'évacuation (6 ; 40).

9. Chaudière selon l'une des revendications 1 à 8, **caractérisée en ce qu'**une zone dépourvue de moyens de chauffe ou de moyens de transmission de la chaleur (24) est prévue sous l'extrémité inférieure du tube d'évacuation (40).

10. Chaudière selon l'une des revendications 1 à 9, **caractérisée en ce que** l'extrémité inférieure du tube d'évacuation (40) est disposée dans une dépression (48) formée dans le fond de la chambre d'ébullition (21).

11. Chaudière selon l'une des revendications 1 à 10, **caractérisée en ce que** les moyens de chauffe (2) sont formés par un élément chauffant plat.

12. Chaudière selon l'une des revendications 1 à 11, **caractérisée en ce que** les moyens de chauffe (25) sont formés par un élément chauffant blindé associé à une plaque de diffusion de chaleur (24) fixée sous le fond de la chambre d'ébullition (21).

13. Appareil électroménager, comportant un réservoir d'eau alimentant une chaudière reliée à un conduit d'évacuation de l'eau chauffée, **caractérisé en ce qu'**il comporte une chaudière selon l'une des revendications 1 à 12.

14. Appareil électroménager, selon la revendication 13, **caractérisé en ce qu'**il s'agit d'une machine à boisson chaude.

## Patentansprüche

1. Kessel vom Typ Siedekessel, mit einer Siedekammer (1; 21), der Heizmittel (2; 23) zugeordnet sind, einem Wasserzulaufrohr (3; 33) mit einem Einlass (11; 38), der mit einem Wasservorratsbehälter (4; 31) über eine Leitung (5; 32) verbunden ist, die ein Rückschlagventil (9; 34) enthält, einem Ablaufsteigrohr (6; 40) für heißes Wasser, dessen unteres Ende nahe dem Boden der Siedekammer angeordnet ist, wobei das genannte Ablaufrohr in der Siedekammer nahe der Decke der genannten Kammer eine Öffnung (7; 45) aufweist, **dadurch gekennzeichnet, dass** die Öffnung (7; 45) in der Wandung des genannten Rohrs durch einen länglichen, nach unten verlaufenden Ausschnitt gebildet ist.

2. Kessel nach Anspruch 1, **dadurch gekennzeichnet, dass** die horizontale Breite der Öffnung (7) zwischen 1/10 und 1/3 des Innendurchmessers des Wasserablaufrohrs (6) und vorzugsweise zwischen 1/7 und 1/4 des genannten Durchmessers beträgt.

3. Kessel nach Anspruch 1 oder 2, **dadurch gekennzeichnet, dass** die Öffnung (7; 45) in Form eines in Längsrichtung verlaufenden Ausschnitts im Ablaufrohr (6; 40) vorliegt.

4. Kessel nach Anspruch 3, **dadurch gekennzeichnet, dass** der in Längsrichtung verlaufenden Ausschnitt eine konstante Breite aufweist.

5. Kessel nach einem der Ansprüche 1 bis 4, **dadurch gekennzeichnet, dass** die Höhe der Öffnung (45) kleiner als 1/3 des Abstands zwischen dem oberen Ende der Öffnung (45) und dem Boden der Siedekammer (21) ist.

6. Kessel nach einem der Ansprüche 1 bis 5, **dadurch gekennzeichnet, dass** das Wasserzulaufrohr (3; 33) einen Austritt (12; 36) aufweist, der weiter nach unten ragt als der obere Teil der Öffnung (7; 45).

7. Kessel nach einem der Ansprüche 1 bis 6, **dadurch gekennzeichnet, dass** das Rückschlagventil (34) einen Schwimmer (35) enthält, der in einer Leitung (32) angeordnet ist, die im Inneren der Siedekammer (21) vorgesehen ist.

8. Kessel nach einem der Ansprüche 1 bis 7, **dadurch gekennzeichnet, dass** die Siedekammer (1; 21) aus einer unteren Metallschale (14; 22) gebildet ist, der die Heizmittel (2; 23) zugeordnet sind und die von einem Deckel (15; 26) übergriffen wird, der das Zulaufrohr (3; 33) und das Ablaufrohr (6; 40) enthält.

9. Kessel nach einem der Ansprüche 1 bis 8, **dadurch gekennzeichnet, dass** ein Bereich ohne Heizmittel bzw. Wärmeübertragungsmittel (24) unter dem unteren Ende des Ablaufrohrs (40) vorgesehen ist.

10. Kessel nach einem der Ansprüche 1 bis 9, **dadurch gekennzeichnet, dass** das untere Ende des Ablaufrohrs (40) in einer Vertiefung angeordnet ist, die im Boden der Siedekammer (21) ausgebildet ist.

11. Kessel nach einem der Ansprüche 1 bis 10, **dadurch gekennzeichnet, dass** die Heizmittel (2) aus einem flachen Heizelement gebildet sind.

12. Kessel nach einem der Ansprüche 1 bis 11, **dadurch gekennzeichnet, dass** die Heizmittel (25) aus einem abgeschirmten Heizelement gebildet sind, dem eine Wärmediffusionsplatte (24) zugeordnet ist, die unter dem Boden der Siedekammer (21) befestigt ist.

13. Elektro-Haushaltsgerät mit einem Wasservorratsbehälter, der einen Kessel speist, welcher mit einer Heißwasserablaufleitung verbunden ist, **dadurch gekennzeichnet, dass** es einen Kessel nach einem der Ansprüche 1 bis 12 enthält.

14. Elektro-Haushaltsgerät nach Anspruch 13, **dadurch gekennzeichnet, dass** es sich um einen Heißgetränkebereiter handelt.

## Claims

1. A boiler of the kettle type comprising a boiling chamber (1; 21) associated with heater means (2; 23), a water admission tube (3; 33) presenting an inlet (11; 38) connected to a water tank (4; 31) via a duct (5; 32) including a non-return valve (9; 34), an upwardly-extending delivery tube (6; 40) for delivering heated water, the bottom end thereof being disposed close to the bottom of the boiling chamber, said delivery tube presenting an opening (7; 45) in the boiling chamber close to the ceiling of said chamber, the boiler being **characterized in that** the opening (7; 45) is formed through the wall of said tube by a downwardly-extending elongate cutout.

2. A boiler according to claim 1, **characterized in that** the horizontal width of the opening (7) lies in the range 1/10th to 1/3rd the inside diameter of the water delivery tube (6), and preferably in the range 1/7th to 1/4th of said diameter.

3. A boiler according to claim 1 or claim 2, **characterized in that** the opening (7; 45) is in the form of a longitudinal cutout in the delivery tube (6; 40).

4. A boiler according to claim 3, **characterized in that** the longitudinal cutout is of constant width.

5. A boiler according to any one of claims 1 to 4, **characterized in that** the height of the opening (45) is less than 1/3rd the distance between the top end of the opening (45) and the bottom of the boiling chamber (21).

6. A boiler according to any one of claims 1 to 5, **characterized in that** the water admission tube (3; 33) presents an outlet (12; 36) extending further down than the top portion of the opening (7; 45).

7. A boiler according to any one of claims 1 to 6, **characterized in that** the non-return valve (34) comprises a float (35) disposed in a duct (32) placed inside the boiling chamber (21).

8. A boiler according to any one of claims 1 to 7, **characterized in that** the boiling chamber (1; 21) is formed by a bottom metal cup (14; 22), having the heater means (2; 23) associated therewith and surmounted by a cover (15; 26) including the admission tube (3; 33) and the delivery tube (6; 40).

9. A boiler according to any one of claims 1 to 8, **characterized in that** a zone (24) that does not have heater means or means for transmitting heat is provided beneath the bottom end of the delivery tube (40).

10. A boiler according to any one of claims 1 to 9, **characterized in that** the bottom end of the delivery tube (40) is disposed in a depression (48) formed in the bottom of the boiling chamber (21).

11. A boiler according to any one of claims 1 to 10, **characterized in that** the heater means (2) are formed by a flat heater element.

12. A boiler according to any one of claims 1 to 11, **characterized in that** the heater means (25) are formed by a metal-clad heater element associated with a heat-diffusing plate (24) fixed beneath the bottom of the boiling chamber (21).

13. An electrical household appliance comprising a water tank feeding a boiler connected to a hot water delivery duct, **characterized in that** it includes a boiler according to any one of claims 1 to 12.

14. An electrical domestic appliance according to claim 13, **characterized in that** it constitutes a hot beverage machine.
